(19) Europäisches Patentamt
European Patent Office
Office européen des brevets

(11) **EP 4 769 876 A1**

(12) **EUROPEAN PATENT APPLICATION**
published in accordance with Art. 153(4) EPC

(43) Date of publication:
**01.07.2026 Bulletin 2026/27**

(21) Application number: **24914676.2**

(22) Date of filing: **05.01.2024**

(51) International Patent Classification (IPC):
**H02J 7/00** (2026.01)          **H02M 3/156** (2006.01)

(52) Cooperative Patent Classification (CPC):
**H02J 7/00; H02M 3/156**

(86) International application number:
**PCT/CN2024/070926**

(87) International publication number:
**WO 2025/145447 (10.07.2025 Gazette 2025/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Honor Device Co., Ltd.
Shenzhen 518040 (CN)**

(72) Inventors:
• LIU, Ming
  **Shenzhen, Guangdong 518040 (CN)**
• REN, Zichen
  **Shenzhen, Guangdong 518040 (CN)**

(74) Representative: **Goddar, Heinz J.
Boehmert & Boehmert
Anwaltspartnerschaft mbB
Pettenkoferstrasse 22
80336 München (DE)**

(54) **ELECTRONIC DEVICE**

(57)    Embodiments of this application disclose an electronic device, including a battery pack, a power-on control circuit, and a power management chip. The power-on control circuit includes a button circuit, a first switch circuit, and a second switch circuit. The button circuit is connected to the battery pack, and the button circuit outputs a first signal in response to a button operation by a user. When receiving a voltage signal of a system power source, the first switch circuit can connect the button circuit to the power management chip. When receiving the voltage signal of the system power source, the second switch circuit can output a second signal to the battery pack. The electronic device in this application can synchronously wake up a battery and trigger a power-on by pressing a power button or connecting the electronic device to a power source through a USB in a low power mode, thereby improving applicability of a product.

FIG. 4

EP 4 769 876 A1

## Description

### TECHNICAL FIELD

This application belongs to the field of electronic product technologies, and in particular, to an electronic device.

### BACKGROUND

In order to meet requirements for battery safety in air transportation, electronic products need to be transported at a low battery level when shipped overseas. However, when an electronic product is sold to a user, it is required that the electronic device can be powered on when the user presses a power button of the electronic device, that is, it is necessary for a battery with a low power to still have enough power to enable the electronic device to be powered on after transportation. Therefore, electronic products need to be shipped, transported, and stored in a set low power mode.

For example, the electronic product is a mobile phone. When entering the low power mode, the mobile phone enables a battery management system (battery management system, BMS) to control a switch circuit to disconnect the battery from the mobile phone, and further enables the battery management system to turn off most modules to enable the battery to enter a sleep state. However, in this scenario, when the user wants to power on the mobile phone for the first time, there may be two power-on manners: pressing a power button or connecting the mobile phone to a power source through a universal serial bus (universal serial bus, USB). In both of the two power-on manners, the mobile phone needs power supply of the battery to be powered on. A current mobile phone cannot implement the foregoing effect. Therefore, when the mobile phone is in the low power mode, how to wake up the battery and trigger a power-on by pressing the power button or connecting the mobile phone to the power source through the USB by the user is one of the problems currently requiring urgent resolution.

### SUMMARY

Embodiments of this application disclose an electronic device. The electronic device in this application can synchronously wake up a battery and trigger a power-on in a manner of pressing a power button or connecting the electronic device to a power source through a USB in a low power mode.

This application provides an electronic device, including a battery pack, a power-on control circuit, and a power management chip. The power-on control circuit may be electrically connected between the battery pack and the power management chip, and the power-on control circuit may include a button circuit, a first switch circuit, and a second switch circuit. The button circuit is electrically connected to the battery pack, and the button circuit can output a first signal in response to a button operation by a user. The first switch circuit is electrically connected between the button circuit and the power management chip, and the first switch circuit is configured to connect, when receiving a voltage signal of a system power source, the button circuit to the power management chip. The second switch circuit is electrically connected to the battery pack, and the second switch circuit outputs a second signal to the battery pack when receiving the voltage signal of the system power source. Based on such a design, the electronic device in this application can meet requirements for battery safety in air transportation when shipped overseas, and can wake up a battery and trigger a power-on by pressing a power button or connecting the electronic device to the power source through the USB by the user when sold to the user, thereby improving applicability of a product.

In an optional implementation, when the first signal output by the button circuit wakes up the battery pack, the system power source outputs, based on power supply of the battery pack, the voltage signal to control the first switch circuit to connect the button circuit to the power management chip, so that the first signal is transmitted to the power management chip. When the user presses the power button of the electronic device, the battery can be woken up and the power-on can be triggered synchronously.

In an optional implementation, when the electronic device is plug-connected to a universal serial bus device, the power management chip triggers the electronic device to be powered on through a system power management interface bus, so that the system power source outputs the voltage signal to the second switch circuit, and the second switch circuit outputs, when receiving the voltage signal, the second signal to the battery pack to wake up the battery pack. When the user connects the electronic device to the power source through the USB, the battery can be woken up and the power-on can be triggered synchronously.

In an optional implementation, the button circuit includes a power button and a first resistor. The power button includes a first terminal, a second terminal, and a pressing end, the first terminal of the power button is grounded, and the second terminal of the power button is electrically connected to the first switch circuit and the battery pack through the first resistor. Based on such a design, when the user presses the power button, the button circuit can output the first signal to the battery pack and the power management chip, thereby waking up the battery and triggering the power-on synchronously.

In an optional implementation, when the pressing end is pressed, the first terminal and the second terminal are connected, so that the button circuit outputs the first signal to the battery pack and the power management chip. Therefore, when the user presses the pressing end, the button circuit can output the first signal, and can synchronously wake up the battery and trigger the power-on.

In an optional implementation, when the pressing end is not pressed, the first terminal is disconnected from the second terminal.

In an optional implementation, the first switch circuit includes a first switch transistor and a second resistor. A first terminal of the first switch transistor is electrically connected to the system power source, a second terminal of the first switch transistor is electrically connected to the power management chip, a third terminal of the first switch transistor is electrically connected to the second terminal of the power button through the first resistor, and the third terminal of the first switch transistor is further electrically connected to the battery pack through the second resistor.

In an optional implementation, when the pressing end is pressed, the first signal is transmitted to the battery pack to wake up the battery pack, and the system power source outputs the voltage signal to control the first switch transistor to be turned on, so that the first signal is transmitted to the power management chip. Based on such a design, after the first signal wakes up the battery pack, the first signal output by the button circuit can be transmitted to the power management chip by controlling a turn-on of the first switch transistor, thereby waking up the battery and triggering the power-on synchronously by pressing the power button.

In an optional implementation, the second switch circuit includes a second switch transistor and a third resistor. A first terminal of the second switch transistor is electrically connected to the system power source, a second terminal of the second switch transistor is grounded, and a third terminal of the second switch transistor is electrically connected to the battery pack through the third resistor.

In an optional implementation, the battery pack includes a battery cell, a battery management chip, and a fourth resistor. An enable pin of the battery management chip is electrically connected to a positive electrode of the battery cell through the fourth resistor, the enable pin is further electrically connected to the third terminal of the second switch transistor through the third resistor, and the enable pin is further electrically connected to the third terminal of the first switch transistor through the second resistor.

In an optional implementation, when the electronic device is plug-connected to a universal serial bus device, the power management chip triggers the electronic device to be powered on through a system power management interface bus, so that the system power source outputs the voltage signal to the second switch transistor to control the second switch transistor to be turned on, and the second signal is transmitted to the enable pin of the battery pack to wake up the battery pack.

In an optional implementation, when the electronic device is plug-connected to a universal serial bus device, the power management chip triggers the electronic device to be powered on through a system power management interface bus, and the system power source outputs the voltage signal to control the first switch transistor to be turned on.

In an optional implementation, the first signal is used to wake up the battery pack, and is used to enable the power management chip to trigger the electronic device to be powered on, and the second signal is used to wake up the battery pack. The first signal and the second signal may both be low-level signals.

The electronic device provided in this application can synchronously wake up the battery and trigger the power-on by pressing the power button or connecting the electronic device to the power source through the USB in the low power mode. The electronic device in this application can meet requirements for battery safety in air transportation when shipped overseas, and can be powered on by pressing the power button or plugging the USB into the electronic device by the user when sold to the user, thereby improving applicability of the product.

**BRIEF DESCRIPTION OF DRAWINGS**

FIG. 1 is a diagram of an application scenario of an electronic device according to an embodiment of this application;
FIG. 2 is a diagram of another application scenario of an electronic device according to an embodiment of this application;
FIG. 3 is a schematic diagram of an electronic device according to an embodiment of this application;
FIG. 4 is another schematic diagram of an electronic device according to an embodiment of this application; and
FIG. 5 is a circuit diagram of an electronic device according to an embodiment of this application.

**DESCRIPTION OF EMBODIMENTS**

In the following descriptions, the terms "first" and "second" are used merely for a purpose of description, and shall not be construed as indicating or implying relative importance or implicitly indicating a quantity of indicated technical features. Therefore, a feature defined with "first" and "second" may explicitly or implicitly include one or more such features. In descriptions of embodiments of this application, words such as "example" and "alternatively" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" and "alternatively" or "for example" are used to present related concepts in a specific manner.

In this application, referring to "an embodiment" means that specific features, structures, or characteristics described with reference to the embodiment may be included in at least one embodiment of this application. The term appearing at various locations in this specification does not necessarily refer to a same embodiment, or an independent or alternative embodiment mutually exclusive with another embodiment. A person skilled in the art explicitly and implicitly understands that the described embodiments in this application may be combined with another embodiment.

In order to meet requirements for battery safety in air transportation, electronic products need to be transported at a low battery level when shipped overseas. However, when an electronic product is sold to a user, it is required that the electronic device can be powered on when the user presses a power button of the electronic device, that is, it is necessary for a battery with a low power to still have enough power to enable the electronic device to be powered on after transportation. Therefore, electronic products need to be shipped, transported, and stored in a set low power mode.

For example, the electronic product is a mobile phone. When entering the low power mode, the mobile phone enables a battery management system to control a charging and discharging switch circuit to disconnect the battery from the mobile phone, and further enables the battery management system to turn off most modules to enable the battery to enter a sleep state. In this scenario, when the user wants to power on the mobile phone for the first time, there may be two power-on manners: pressing a power button or connecting the mobile phone to a power source through a universal serial bus (universal serial bus, USB). In both of the two power-on manners, the mobile phone needs power supply of the battery to be powered on. A current mobile phone cannot implement the foregoing effect. Therefore, when the mobile phone is in the low power mode, how to wake up the battery and trigger a power-on synchronously by pressing the power button or connecting the mobile phone to the power source through the USB by the user is a problem currently requiring urgent resolution.

For the foregoing problem, this application provides an electronic device that can synchronously wake up the battery and trigger the power-on by pressing the power button or connecting the electronic device to the power source through the USB in the low power mode. The electronic device in this application can meet requirements for battery safety in air transportation when shipped overseas, and can be powered on by pressing the power button or plugging the USB into the electronic device by the user when sold to the user, thereby improving applicability of the product.

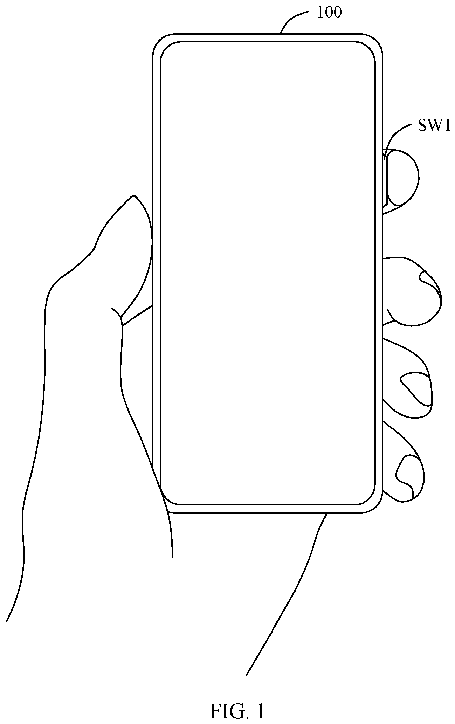

Referring to FIG. 1, FIG. 1 is a diagram of an application scenario of an electronic device 100 according to an embodiment of this application. The electronic device 100 in this application may be an electronic product such as a mobile phone, a tablet computer, or a smart wearable device. The embodiments of this application are described by taking an example in which the electronic device 100 is a mobile phone.

As shown in FIG. 1, FIG. 1 is a diagram of an application scenario in which the electronic device 100 is powered on by pressing a button in this application. The electronic device 100 is in a low power mode, and the user can control the electronic device 100 to exit the low power mode (that is, the battery is woken up) and trigger the electronic device 100 to be powered on by pressing a power button SW1 of the electronic device 100. It may be understood that the low power mode mentioned in this specification refers to a situation in which a battery management system in the electronic device 100 controls a charging and discharging switch circuit to disconnect the battery from the electronic device 100, so that the battery no longer supplies power to the electronic device 100, and most modules in the battery management system are turned off to enable the battery to enter a sleep state.

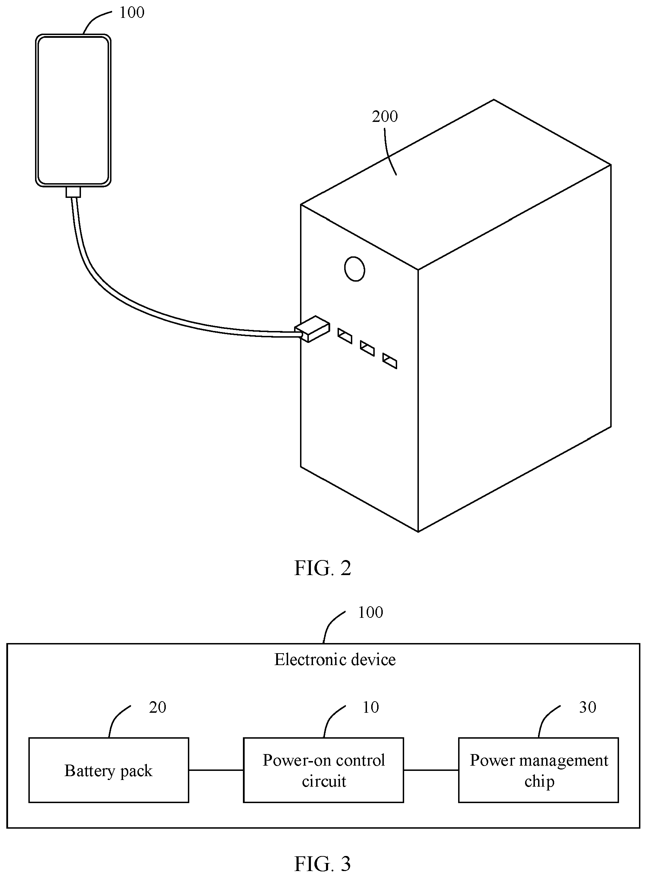

Referring to FIG. 2, FIG. 2 is a diagram of another application scenario of an electronic device 100 according to an embodiment of this application.

As shown in FIG. 2, FIG. 2 is a diagram of an application scenario in which the electronic device 100 is powered on by connecting the electronic device 100 to a power source through a USB in this application. In this scenario, the electronic device 100 is in the low power mode. A USB interface of the electronic device 100 can be plug-connected to a USB interface of an electronic device 200 by using a USB cable, and the electronic device 200 can supply power to the electronic device 100 to trigger the electronic device 100 to be powered on. It may be understood that, in some optional implementations, the electronic device 200 may be, but is not limited to, a charger, a computer chassis, or a notebook computer. The embodiments of this application are described by taking an example in which the electronic device 200 is a computer chassis.

In the foregoing application scenarios as shown in FIG. 1 and FIG. 2, the electronic device 100 of this application can implement functions of button power-on and USB power-on in the low power mode.

Referring to FIG. 3, FIG. 3 is a schematic diagram of an electronic device 100 according to an embodiment of this application.

The electronic device 100 includes a power-on control circuit 10, a battery pack 20, and a power management chip 30. The power-on control circuit 10 is electrically connected between the battery pack 20 and the power management chip 30.

The battery pack 20 is configured to supply power to an electrical apparatus in the electronic device 100. The electrical apparatus may be a mainboard, a screen, a microphone, or the like. The power-on control circuit 10 is configured to: in response to an operation by the user, control the battery pack 20 to exit the low power mode, and trigger the electronic device 100 to be powered on.

For example, when the user presses the power button, the power-on control circuit 10 can wake up the battery pack 20 and trigger the electronic device 100 to be powered on. When the user plug-connects the USB interface of the electronic device 100 to the USB interface of the electronic device 200 by using the USB cable, the power-on control circuit 10 can wake up the battery pack 20 and trigger the electronic device 100 to be powered on.

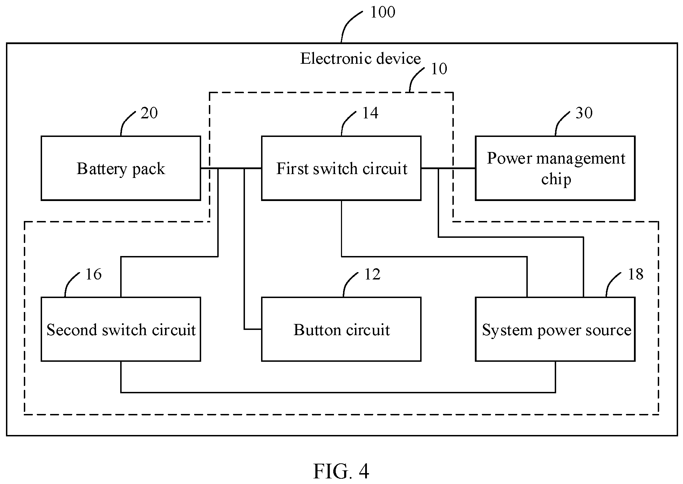

Referring to FIG. 4, FIG. 4 is a schematic diagram of an electronic device 100 according to an embodiment of this application.

As shown in FIG. 4, in this embodiment, the power-on control circuit 10 may include a button circuit 12, a first switch circuit 14, and a second switch circuit 16.

The first switch circuit 14 is electrically connected between the battery pack 20 and the power management chip 30, the first switch circuit 14 is further electrically connected to a system power source 18, the button circuit 12 is electrically connected to the battery pack 20 and the first switch circuit 14, and the second switch circuit 16 is electrically connected to the battery pack 20 and the first switch circuit 14. The second switch circuit 16 is further electrically connected to the system power source 18.

It may be understood that the system power source 18 may be configured to output, when receiving power supply of the battery pack 20, a voltage signal to the first switch circuit 14 and the second switch circuit 16. The system power source 18 may alternatively be configured to output, when the electronic device 100 is connected to a power source through a USB, a voltage signal to the first switch circuit 14 and the second switch circuit 16. In an optional example, the system power source 18 may be a power conversion circuit in the electronic device 100. For example, the system power source 18 may be a power conversion circuit on the mainboard in the electronic device 100, and the power conversion circuit may be configured to convert a power supply voltage of the battery pack 20 into a voltage signal having a voltage value. The power conversion circuit may alternatively be configured to convert, when the electronic device 100 is connected to the electronic device 200 by using the USB cable, a power supply voltage of the electronic device 200 into a voltage signal having a voltage value. Optionally, the voltage value may be 1.8 V.

It may be understood that the button circuit 12 can output a first signal in response to a button operation by the user. The first signal may be used to wake up the battery pack 20, and used to enable the power management chip 30 to trigger the electronic device 100 to be powered on.

The first switch circuit 14 may be further connected between the button circuit 12 and the power management chip 30. When receiving the voltage signal of the system power source 18, the first switch circuit 14 can connect the button circuit 12 to the power management chip 30.

When receiving the voltage signal of the system power source 18, the second switch circuit 16 can output a second signal, and the second signal can be used to wake up the battery pack 20.

It may be understood that the first signal and the second signal may both be low-level signals.

When the electronic device 100 is in the low power mode, a battery management chip (not shown in FIG. 4) in the battery pack 20 does not work, a discharging switch transistor of the charging and discharging switch circuit in the battery pack 20 is turned off, the battery pack 20 does not supply power to the electronic device 100, and the system power source 18 does not output a voltage signal to the first switch circuit 14 and the second switch circuit 16. The first switch circuit 14 disconnects the button circuit 12 from the power management chip 30, and the first switch circuit 14 further disconnects the battery pack 20 from the power management chip 30. The second switch circuit 16 is in an off state, that is, the second switch circuit 16 does not output a second signal to the battery pack 20.

In a first power-on scenario, the user presses the power button of the electronic device 100, and the button circuit 12 outputs the first signal to the battery management chip of the battery pack 20 to enable the battery management chip to start working, and the battery management chip controls the discharging switch transistor of the charging and discharging switch circuit to be turned on, so that the battery pack 20 supplies power to the electronic device 100, thereby waking up the battery pack 20. The system power source 18 is configured to output, when receiving power supply of the battery pack 20, a voltage signal to the first switch circuit 14 and the second switch circuit 16. The first switch circuit 14 is configured to connect, when receiving the voltage signal of the system power source 18, the button circuit 12 to the power management chip 30. In other words, the button circuit 12 is connected to the power management chip 30 through the first switch circuit 14 to output the first signal to the power management chip 30, thereby triggering the power-on of the electronic device 100.

In a second power-on scenario, the user plug-connects the USB interface of the electronic device 100 to the USB interface of the electronic device 200 by using the USB cable. The electronic device 200 supplies power to the electronic device 100. The power management chip 30 can trigger the power-on of the electronic device 100 by using a system power management interface (system power management interface, SPMI) bus. The system power source 18 outputs a voltage signal to the second switch circuit 16. The second switch circuit 16 is configured to output, after receiving the voltage signal, a second signal to the battery management chip of the battery pack 20 to enable the battery management chip to start working, and the battery management chip controls the discharging switch transistor of the charging and discharging switch circuit to be turned on, so that the battery pack 20 supplies power to the electronic device 100, thereby waking up the battery pack 20.

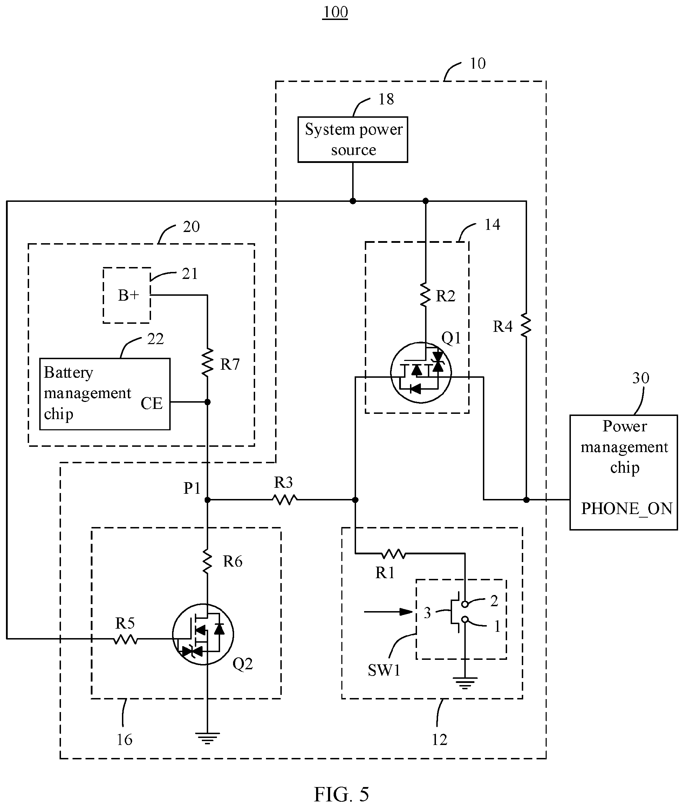

Referring to FIG. 5, FIG. 5 is a circuit diagram of an electronic device 100 according to an embodiment of this application.

The button circuit 12 includes a power button SW1 and a resistor R1. The power button SW1 includes a first terminal 1, a second terminal 2, and a pressing end 3. The first terminal 1 of the power button SW1 is grounded, and the second terminal 2 of the power button SW1 is connected to the first switch circuit 14 through the resistor R1. It may be understood that, in an optional example, the pressing end 3 may be a metal elastic piece with a protrusion.

When the pressing end 3 of the power button SW1 is not pressed, the first terminal 1 of the power button SW1 is disconnected from the second terminal 2 of the power button SW1. When the pressing end 3 of the power button SW1 is pressed, a metal piece is deformed, so that the metal piece can implement electrical connection between the first terminal 1 of the power button SW1 and the second terminal 2 of the power button SW1. After the user releases the power button SW1, the protrusion of the metal piece rebounds, so that the first terminal 1 of the power button SW1 is disconnected from the second terminal 2 of the power button SW1.

In this embodiment, the first switch circuit 14 includes a switch transistor Q1 and a resistor R2.

A first terminal of the switch transistor Q1 is connected to the system power source 18 through the resistor R2, a second terminal of the switch transistor Q1 is connected to the power management chip 30, a third terminal of the switch transistor Q1 is connected to the second terminal 2 of the power button SW1 through the resistor R1, and the third terminal of the switch transistor Q1 may be further connected to the battery pack 20 through a resistor R3. The first terminal of the switch transistor Q1 can serve as a control terminal of the switch transistor Q1. In other words, the first terminal of the switch transistor Q1 can be configured to receive a voltage signal output by the system power source 18, and the voltage signal can control on or off of the switch transistor Q1.

In this embodiment, when the switch transistor Q1 is turned on, the power management chip 30 is connected to the battery pack 20, and the power management chip 30 is connected to the button circuit 12. When the switch transistor Q1 is turned off, the power management chip 30 is disconnected from the battery pack 20, and the power management chip 30 is disconnected from the button circuit 12.

It may be understood that the switch transistor Q1 in this embodiment may be any one of a metal-oxide-semiconductor field-effect transistor (Metal-Oxide-Semiconductor Field-Effect Transistor, MOSFET), an insulated gate bipolar transistor (Insulated Gate Bipolar Transistor, IGBT), a bipolar power transistor (Bipolar Power Transistor, BPT), a junction gate field-effect transistor (junction gate field-effect transistor, JFET), a bipolar junction transistor (bipolar junction transistor, BJT), or a wide bandgap semiconductor field-effect transistor.

The power management chip 30 includes a trigger pin PHONE_ON, and the trigger pin PHONE_ON of the power management chip 30 is connected to the system power source 18 through a resistor R4. The trigger pin PHONE_ON of the power management chip 30 is further electrically connected to the second terminal of the switch transistor Q1.

The second switch circuit 16 includes a switch transistor Q2, a resistor R5, and a resistor R6.

A first terminal of the switch transistor Q2 is connected to the system power source 18 through the resistor R5, a second terminal of the switch transistor Q2 is grounded, and a third terminal of the switch transistor Q2 is connected to the battery pack 20 through the resistor R6. The first terminal of the switch transistor Q2 can serve as a control terminal of the switch transistor Q2. In other words, the first terminal of the switch transistor Q2 can be configured to receive a voltage signal output by the system power source 18, and the voltage signal can control on or off of the switch transistor Q2.

It may be understood that the switch transistor Q2 in this embodiment may be any one of a metal-oxide-semiconductor field-effect transistor (Metal-Oxide-Semiconductor Field-Effect Transistor, MOSFET), an insulated gate bipolar transistor (Insulated Gate Bipolar Transistor, IGBT), a bipolar power transistor (Bipolar Power Transistor, BPT), a junction gate field-effect transistor (junction gate field-effect transistor, JFET), a bipolar junction transistor (bipolar junction transistor, BJT), or a wide bandgap semiconductor field-effect transistor.

The battery pack 20 may include a battery cell 21, a battery management chip 22, and a resistor R7.

The battery management chip 22 includes an enable pin CE. The enable pin CE of the battery management chip 22 is connected to a positive electrode B+ of the battery cell 21 through the resistor R7. The enable pin CE of the battery management chip 22 is further electrically connected to a node P1 between the resistor R6 and the resistor R3.

It may be understood that, in an optional embodiment, the battery pack 20 may further include a charging and discharging switch circuit (not shown in the figure). The charging and discharging switch circuit is electrically connected between the battery cell 21 and the electrical apparatus. The electrical apparatus may be a mainboard or another electrical device in the electronic device 100. The charging and discharging switch circuit may include a charging switch transistor and a discharging switch transistor. The battery management chip 22 can supply power to the electrical apparatus through the charging and discharging switch circuit by controlling a state of the discharging switch transistor in the charging and discharging switch circuit. For example, when a signal pin of the battery management chip 22 outputs a signal to control the discharging switch transistor to be turned on, the battery cell 21 can supply power to the electrical apparatus in the electronic device 100. When the battery management chip 22 does not work, that is, the signal pin of the battery management chip 22 does not output a signal, the discharging switch transistor is turned off, and the battery cell 21 does not supply power to the electrical apparatus in the electronic device 100.

The following describes in detail a power-on process of the electronic device 100 in this embodiment of this application by taking the circuit diagram shown in the embodiment of FIG. 5 as an example.

When the electronic device 100 is in the low power mode, the battery management chip 22 of the battery pack 20 does not work, and the discharging switch transistor of the charging and discharging switch circuit is in an off state. In this case, the battery cell 21 does not supply power to the electronic device 100.

In the first power-on scenario, that is, in the scenario in which the user powers on the electronic device 100 by pressing a button, the user can press the pressing end 3 of the power button SW1 of the electronic device 100, the first terminal 1 of the power button SW1 is connected to the second terminal 2 of the power button SW1, and the enable pin CE of the battery management chip 22 is grounded successively through the resistor R3 and the resistor R1. A voltage $V_{ce}$ of the enable pin CE meets the following formula (1):

$$V_{ce}=(r3+r1)/(r7+r3+r1)*V_1 \ (1)$$

$V_{ce}$ is the voltage of the enable pin CE of the battery management chip 22, r3 is a resistance value of the resistor R3, r1 is a resistance value of the resistor R1, r7 is a resistance value of the resistor R7, and $V_1$ is a voltage of the battery cell 21.

It may be understood that, in a possible example, it is assumed that r3 is 200k ohms, r1 is 1.5k ohms, and r7 is 200M ohms. $V_{ce}$=(200k+1.5k)/(2M+200k+1.5k)*$V_1$, where $V_{ce}$ is less than a first threshold. It may be understood that, in an optional implementation, the first threshold may be 0.55 V. In other words, when the voltage of the enable pin CE is less than the first threshold, that is, when the enable pin CE of the battery management chip 22 receives a low-level signal, the battery management chip 22 starts working, that is, the battery pack 20 is woken up to exit the low power mode, and the battery pack 20 controls the discharging switch transistor in the charging and discharging switch circuit to be turned on, so that the battery pack 20 supplies power to the electrical apparatus in the electronic device 100. After receiving the power supply of the battery pack 20, the system power source 18 outputs a voltage signal to the switch transistor Q2 and the switch transistor Q1 to control the switch transistor Q2 and the switch transistor Q1 to be turned on, and the trigger pin PHONE_ON of the power management chip 30 is grounded through the resistor R1. In this way, a voltage of the trigger pin PHONE_ON is pulled down to less than a second threshold, that is, the trigger pin PHONE_ON of the power management chip 30 receives a low-level signal, thereby triggering the electronic device 100 to be powered on. It may be understood that, in an optional implementation, the second threshold may be 0.63 V.

Because the switch transistor Q2 is in an on state, even if the user has released the power button SW1, the enable pin CE of the battery management chip 22 is grounded through the resistor R6, that is, the voltage $V_{ce}$ of the enable pin CE is still less than the first threshold, that is, the enable pin CE of the battery management chip 22 receives a low-level signal of the second switch circuit 16, so that the battery pack 20 can be maintained in a working state, thereby supplying power to the electronic device 100. In addition, after the switch transistor Q1 is turned on, the trigger pin PHONE_ON of the power management chip 30 is grounded through the resistor R3 and the resistor R6. The resistor R3 is added to the loop, that is, the voltage of the trigger pin PHONE_ON is greater than a third threshold. In this way, the voltage of the trigger pin PHONE_ON does not interfere with a subsequent power-on process of the electronic device 100, so as to ensure normal power-on of the electronic device 100. It may be understood that, in an optional implementation, the third threshold may be 1.17 V.

In the second power-on scenario, that is, in the scenario in which the user plug-connects the USB interface of the electronic device 100 to the USB interface of the electronic device 200 by using the USB cable, the power management chip 30 can trigger the electronic device 100 to be powered on through the SPMI bus, and the system power source 18 outputs a voltage signal to the switch transistor Q1 and the switch transistor Q2 to control the switch transistor Q1 and the switch transistor Q2 to be turned on. In this case, the enable pin CE is grounded through the resistor R6, and the voltage $V_{ce}$ of the enable pin CE meets the following formula (2):

$$V_{ce}=(r6/(r6+r7))×V_1 \ (2)$$

r6 is a resistance value of the resistor R6, r7 is a resistance value of the resistor R7, and $V_1$ is the voltage of the battery cell 21.

In an example, r6 is 1.5k ohms, and r7 is 200M ohms. $V_{ce}$=(1.5k/(1.5k+2M))×$V_1$, and $V_{ce}$ is less than the first threshold. The enable pin CE of the battery management chip 22 receives a low-level signal, and the battery management chip 22 starts working, that is, the battery pack 20 is woken up to exit the low power mode. The battery pack 20 controls the discharging switch transistor in the charging and discharging switch circuit to be turned on, so that the battery pack 20 supplies power to the electronic device 100. In addition, after the switch transistor Q1 is turned on, the trigger pin PHONE_ON of the power management chip 30 is grounded through the resistor R3 and the resistor R6. The resistor R3 is added to the loop, that is, the voltage of the trigger pin PHONE_ON is greater than a third threshold. In this way, the voltage of the trigger pin PHONE_ON does not interfere with a subsequent power-on process of the electronic device 100, so as to ensure normal power-on of the electronic device 100. It may be understood that, in an optional implementation, the third threshold may be 1.17 V.

In the power-on control circuit 10 of this application, the switch transistor Q1 is electrically connected between the positive electrode B+ of the battery cell 21 and the trigger pin PHONE_ON of the power management chip 30. When the electronic device 100 is powered off and enters the low power mode, the system power source 18 stops outputting a voltage signal to the switch transistor Q1, and the switch transistor Q1 is in an off state, and thus the positive electrode B+ of the battery cell 21 is disconnected from the power management chip 30. In this way, a leakage path from the battery packet to a mainboard side can be cut off when the electronic device 100 is powered off, thereby reducing leakage of the battery packet.

Based on the foregoing embodiments, the electronic device 100 in this application can meet requirements for battery safety in air transportation when shipped overseas, and can implement synchronous triggering of battery activation and the power-on by pressing the power button when sold to the user, thereby improving applicability of the product.

Finally, it should be noted that the foregoing embodiments are merely intended to describe the technical solutions of some embodiments in this application, but are not intended to limit this application. Although some embodiments in this application are described in detail with reference to the example embodiments, a person of ordinary skill in the art should understand that modifications or equivalent replacements may be made to the technical solutions of some embodiments in this application without departing from the spirit and scope of the technical solutions of some embodiments in this application.

**Claims**

1. An electronic device, comprising a battery pack, a power-on control circuit, and a power management chip, wherein the power-on control circuit is electrically connected between the battery pack and the power management chip, and the power-on control circuit comprises a button circuit, a first switch circuit, and a second switch circuit;

   the button circuit is electrically connected to the battery pack, and the button circuit is configured to output a first signal in response to a button operation by a user;
   the first switch circuit is electrically connected between the button circuit and the power management chip, and the first switch circuit is configured to connect, when receiving a voltage signal of a system power source, the button circuit to the power management chip; and
the second switch circuit is electrically connected to the battery pack, and the second switch circuit outputs a second signal to the battery pack when receiving the voltage signal of the system power source.

2. The electronic device according to claim 1, wherein when the first signal output by the button circuit wakes up the battery pack, the system power source outputs, based on power supply of the battery pack, the voltage signal to control the first switch circuit to connect the button circuit to the power management chip, so that the first signal is transmitted to the power management chip.

3. The electronic device according to claim 1 or 2, wherein
when the electronic device is plug-connected to a universal serial bus device, the power management chip triggers the electronic device to be powered on through a system power management interface bus, so that the system power source outputs the voltage signal to the second switch circuit, and the second switch circuit outputs, when receiving the voltage signal, the second signal to the battery pack to wake up the battery pack.

4. The electronic device according to claim 1, wherein the button circuit comprises a power button and a first resistor, the power button comprises a first terminal, a second terminal, and a pressing end, the first terminal of the power button is grounded, and the second terminal of the power button is electrically connected to the first switch circuit and the battery pack through the first resistor.

5. The electronic device according to claim 4, wherein when the pressing end is pressed, the first terminal and the second terminal are connected, so that the button circuit outputs the first signal to the battery pack and the power management chip.

6. The electronic device according to claim 4, wherein when the pressing end is not pressed, the first terminal is disconnected from the second terminal.

7. The electronic device according to any one of claims 1 to 6, wherein
the first switch circuit comprises a first switch transistor and a second resistor, a first terminal of the first switch transistor is electrically connected to the system power source, a second terminal of the first switch transistor is electrically connected to the power management chip, a third terminal of the first switch transistor is electrically connected to the second terminal of the power button through the first resistor, and the third terminal of the first switch transistor is further electrically connected to the battery pack through the second resistor.

8. The electronic device according to claim 7, wherein when the pressing end is pressed, the first signal is transmitted to the battery pack to wake up the battery pack, and the system power source outputs the voltage signal to control the first switch transistor to be turned on, so that the first signal is transmitted to the power management chip.

9. The electronic device according to claim 7, wherein the second switch circuit comprises a second switch transistor and a third resistor, a first terminal of the second switch transistor is electrically connected to the system power source, a second terminal of the second switch transistor is grounded, and a third terminal of the second switch transistor is electrically connected to the battery pack through the third resistor.

10. The electronic device according to claim 9, wherein the battery pack comprises a battery cell, a battery management chip, and a fourth resistor, an enable pin of the battery management chip is electrically connected to a positive electrode of the battery cell through the fourth resistor, the enable pin is further electrically connected to the third terminal of the second switch transistor through the third resistor, and the enable pin is further electrically connected to the third terminal of the first switch transistor through the second resistor.

11. The electronic device according to claim 10, wherein when the electronic device is plug-connected to a universal serial bus device, the power management chip triggers the electronic device to be powered on through a system power management interface bus, so that the system power source outputs the voltage signal to the second switch transistor to control the second switch transistor to be turned on, and the second signal is transmitted to the enable pin of the battery management chip.

12. The electronic device according to claim 10, wherein when the electronic device is plug-connected to a universal serial bus device, the power management chip triggers the electronic device to be powered on through a system power management interface bus, and the system power source outputs the voltage signal to the first switch transistor to control the first switch transistor to be turned on.

13. The electronic device according to any one of claims 1-12, wherein

the first signal is used to wake up the battery pack, and is used to enable the power management chip to trigger the electronic device to be powered on, and the second signal is used to wake up the battery pack.

14. The electronic device according to claim 13, wherein the first signal and the second signal are both low-level signals.

FIG. 1

FIG. 2

FIG. 3

FIG. 4

FIG. 5

## INTERNATIONAL SEARCH REPORT

| International application No. |
| --- |
| **PCT/CN2024/070926** |

**A.  CLASSIFICATION OF SUBJECT MATTER**

H02J7/00(2006.01)i;  H02M3/156(2006.01)i

According to International Patent Classification (IPC) or to both national classification and IPC

**B.  FIELDS SEARCHED**

Minimum documentation searched (classification system followed by classification symbols)

IPC:H02J,H02M

Documentation searched other than minimum documentation to the extent that such documents are included in the fields searched

Electronic data base consulted during the international search (name of data base and, where practicable, search terms used)

CNTXT, ENTXTC, ENTXT, CNKI: 电子设备, 电子产品, 电子装置, 手机, 电池, 开机, 按键, 开关, 电路, electronic device, +phone, power, battery, key, switch, circuit

**C.  DOCUMENTS CONSIDERED TO BE RELEVANT**

| Category* | Citation of document, with indication, where appropriate, of the relevant passages | Relevant to claim No. |
| --- | --- | --- |
| A | CN 213754028 U (BEIJING ORIONSTAR TECHNOLOGY CO., LTD.) 20 July 2021 (2021-07-20)<br>description, paragraphs [0044]-[0068], and figures 1-3 | 1-14 |
| A | CN 112886664 A (VIVO MOBILE COMMUNICATION CO., LTD.) 01 June 2021 (2021-06-01)<br>entire document | 1-14 |
| A | CN 217689992 U (ECOFLOW INC.) 28 October 2022 (2022-10-28)<br>entire document | 1-14 |
| A | CN 214068770 U (ICON ENERGY SYSTEM CO., LTD.) 27 August 2021 (2021-08-27)<br>entire document | 1-14 |
| A | CN 218335365 U (ECOFLOW INC.) 17 January 2023 (2023-01-17)<br>entire document | 1-14 |
| A | US 5910750 A (MITSUBISHI DENKI K. K.) 08 June 1999 (1999-06-08)<br>entire document | 1-14 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 July 2024** | **30 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| | International application No. |
|---|---|
| | **PCT/CN2024/070926** |

| Patent document cited in search report | | | Publication date (day/month/year) | Patent family member(s) | | | Publication date (day/month/year) |
|---|---|---|---|---|---|---|---|
| CN | 213754028 | U | 20 July 2021 | None | | | |
| CN | 112886664 | A | 01 June 2021 | None | | | |
| CN | 217689992 | U | 28 October 2022 | None | | | |
| CN | 214068770 | U | 27 August 2021 | None | | | |
| CN | 218335365 | U | 17 January 2023 | None | | | |
| US | 5910750 | A | 08 June 1999 | EP | 0911719 | A2 | 28 April 1999 |
| | | | | JPH | 11102237 | A | 13 April 1999 |
| | | | | JP | 3012572 | B2 | 21 February 2000 |

Form PCT/ISA/210 (patent family annex) (July 2022)